# EUROPEAN PATENT APPLICATION

(11) **EP 1 659 820 A2**
(43) Date of publication of application: **24.05.2006**
(21) Application number: 05025467.1
(22) Date of filing: 22.11.2005
(51) Int. Cl.: H04Q 7/38

(54) **Short message service (sms) remote control system and method**

(30) Priority: 22.11.2004 KR 2004095932
(71) Applicant: LG Electronics Inc., Yongdungpo-gu Seoul (KR)
(72) Inventor: Shin, Sang-Cheol, Manan-Gu Anyang, Gyeonggi-Do (KR); Kim, Kyung-Hoon, Seodaemun-Gu Seoul (KR); Jung, Jong-Cheol, Seodaemun-Gu Seoul (KR); Jung, Young-Ho, Gangseo-Gu Seoul (KR)
(74) Representative: Katérle, Axel

(57) **Abstract**

Disclosed are a short message service (SMS) remote control system and method for a mobile communication terminal which enable a developer to easily check if the SMS of the mobile communication terminal at a remote location is normally performed by controlling the SMS of the mobile communication terminal from a remote location via the internet. The short message service (SMS) remote control method for a mobile communication terminal comprises the steps of: transmitting a SMS message to a first mobile communication terminal at a remote location via the internet; transmitting the SMS message transmitted to the first mobile communication terminal to a second mobile communication terminal at the remote location; and transmitting the SMS message transmitted to the second mobile communication terminal via the internet.

## Description

### BACKGROUND OF THE INVENTION

### 1. Field of the Invention

The present invention relates to a mobile communication terminal, and more particularly, to a short message service (SMS) remote control system and method for a mobile communication terminal.

### 2. Description of the Background Art

In general, mobile communication terminals become available to users after passing through the operation of detecting and correcting various kinds of errors in a development step. One of the tests to be necessarily performed before selling mobile communication terminals is a field test that tests if a mobile communication terminal normally operates in a local environment. Especially, a SMS (short message service) performed in order to export mobile communication terminals overseas has a drawback that it is difficult to perform a complete field test within the country (for example, in Korea) because of the difference between an overseas communication network (for example, US communication network) and a domestic communication network (for example, Korean communication network) and the difference between SMSs of wireless communications providers.

Therefore, a SMS developer has to test a SMS by going on a business trip to a foreign country and sending and receiving a SMS test message through a mobile communication terminal in the foreign country by themselves. For instance, in order to sell mobile communication terminals in the US, the SMS developer has to check if a SMS test message is normally sent and received by going to the US by themselves and sending the SMS test message containing a text and a receiver phone number through the mobile communication terminal in the US and receiving the SMS test message through the corresponding mobile communication terminal connected to the US wireless communications network.

Meanwhile, another SMS message sending/receiving method in accordance with the prior art is disclosed in 6,760,584 applied for patents in the US.

### SUMMARY OF THE INVENTION

Therefore, an object of the present invention is to provide a short message service (SMS) remote control system and method for a mobile communication terminal which enable a user to easily check if the SMS of the mobile communication terminal at a remote location is normally performed by controlling the SMS of the mobile communication terminal from a remote location via the internet.

To accomplish the above object, there is provided a short message service (SMS) remote control method for a mobile communication terminal in accordance with the present invention, comprising the steps of: transmitting a SMS (short message service) message to a first mobile communication terminal at a remote location via the internet; transmitting the SMS message transmitted to the first mobile communication terminal to a second mobile communication terminal at the remote location; and transmitting the SMS message transmitted to the second mobile communication terminal via the internet.

To accomplish the above object, there is provided another short message service (SMS) remote control method for a mobile communication terminal in accordance with the present invention, comprising the steps of: converting a SMS (short message service) test message written by a user into a serial communication data through a server system, converting the serial communication data into a TCP/IP data and transmitting the TCP/IP data to a client system via the internet; converting the TCP/IP data received from the server system into the serial communication data and transmitting the serial communication data to a first mobile communication terminal connected to a first virtual comport of the client system; transmitting the SMS message contained in the serial communication data transmitted to the first mobile communication terminal to a second mobile communication terminal connected to a second virtual comport of the client system via a wireless communications network; converting the SMS message transmitted to the second mobile communication terminal into the serial communication data and transmitting the serial communication data to the client system; converting the serial communication data transmitted to the client system from the second mobile communication terminal into a TCP/IP data and transmitting the TCP/IP data to the server system via the internet; and converting the TCP/IP data received from the client system via the internet into the serial communication data and displaying the SMS message contained in the serial communication data on a screen of the server system.

To accomplish the above object, there is provided a short message service (SMS) remote control system for a mobile communication terminal in accordance with the present invention, comprising: a server system transmitting a SMS (short message service) message via the internet; and a client system being connected to the server system via the internet, transmitting the SMS message received from the server system via the internet to a first mobile communication terminal and transmitting the SMS message received from a second mobile communication terminal to the server system via the internet, wherein the server system displays the SMS message received from the client system on a screen.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG.1 is an exemplary view showing the configuration of a system for remotely controlling a short message service of a mobile communication terminal in accordance with an embodiment of the present invention;
FIG.2 is an exemplary view showing a screen of a SMS test tool installed on a server system in accordance with the present invention;
FIG.3 is a flow chart showing a method for transmitting a SMS message to a client system from a server system of the SMS remote control system for the mobile communication terminal in accordance with the embodiment of the present invention;
FIG.4 is a flow chart showing a method for transmitting a SMS message to the server system from the client system of the SMS remote control system for the mobile communication terminal in accordance with the embodiment of the present invention.

### DETAILED DESCRIPTION OF THE PREFERRED EMBODIMENTS

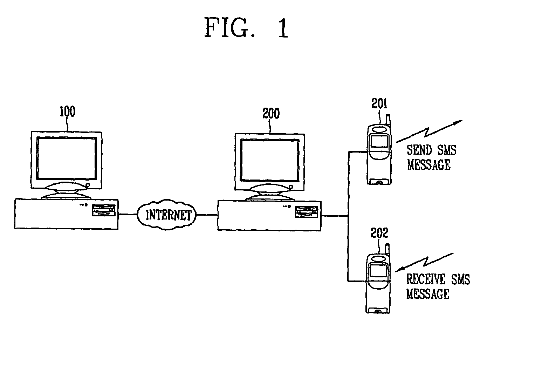

Hereinafter, there will be described in detail with reference to FIGs.1 to 4 a short message service (SMS) remote control system and method for a mobile communication terminal which enable a SMS developer in Korea to easily check if the SMS of a mobile communication terminal in the US is normally performed by the SMS developer of the mobile communication terminal sending/receiving a SMS message by remote control of the SMS of the mobile communication terminal at a remote location (for example, the US) from a domestic location (for example, Korea) via the internet and receiving the received SMS message in real time via the internet.

FIG.1 is an exemplary view showing the configuration of a system for remotely controlling a short message service of a mobile communication terminal in accordance with an embodiment of the present invention.

As shown in FIG.1, the system for remotely controlling a short message service (SMS) of a mobile communication terminal in accordance with the present invention comprises: a server system (for example, server personal computer) 100 transmitting a SMS message (SMS test message) inputted by a SMS developer through a SMS test tool (for example, SMS test program) via the internet and displaying the SMS message transmitted via the internet; and a client system (for example, client PC) 200 being connected to the server system 100 via the internet, transmitting the SMS message received from the server system 100 via the internet to a sending mobile communication terminal 201 and transmitting the SMS message received from a receiving mobile communication terminal 202 to the server system 100 via the internet. The SMS test program is a well known art and may be changed in various ways, thus a detailed description thereof will be omitted.

The sending mobile communication terminal 201 is connected to the client system 200, and transmits the SMS message received from the client system 200 to the receiving mobile communication terminal 202 via a wireless communication network.

The receiving mobile communication terminal 202 is connected to the client system 200, receives the SMS message from the sending mobile communication terminal 201 via the wireless communication network, and transmits the received SMS message to the client system 200. At this time, the client system 200 transmits the SMS message received from the receiving mobile communication terminal 202 to the server system 100 via the internet.

The sending mobile communication terminal 201 and the receiving mobile communication terminal 202 are directly connected to the client system 200 through two virtual comports of the client system 200 for the sake of a SMS test (short message service test).

Hereinafter, the operation of the system for remotely controlling the short message service (SMS) of the mobile communication terminal in accordance with the present invention will be described in detail.

First, the server system 100 converts a SMS message (SMS test message) inputted by a SMS developer into a serial communication data, converts the serial communication data into a TCP/IP (transmission control protocol/internet protocol) data (TCP/IP packet), and transmits the TCP/IP data to the client system 200 via the internet. Here, it is preferable that the server system 100 transmits the serial communication data to a virtual comport and converts the serial communication data transmitted through the virtual comport into the TCP/IP data.

The client system 200 converts the TCP/IP data received from the sever system 100 connected to the internet into the serial communication data, and transmits the serial communication data to the sending mobile communication terminal 201 connected to its virtual comport through serial data communication.

The sending mobile communication terminal 201 transmits the SMS message contained in the serial communication data received from the client system 200 to the receiving mobile communication terminal 202 via a wireless communications network. For instance, the sending mobile communication terminal 201 transmits the SMS message to the receiving mobile communication terminal 202 through a SMS call.

Hereinafter, the receiving mobile communication terminal 202 receives the SMS message transmitted through the SMS call, and transmits the received SMS message to the client system 200. For instance, the receiving mobile communication terminal 202 converts the received SMS message into a serial communication data, and transmits the serial communication data to the client system 200 through serial data communication.

The client system 200 receives the serial communication data received from the receiving mobile communication terminal 202 through its virtual comport, converts the received serial communication data into a TCP/IP data, and transmits the TCP/IP data to the server system 100 via the internet.

The server system 100 converts the TCP/IP data received from the client system 200 via the internet into a serial communication data, and displays a SMS message contained in the serial communication data on a screen. Here, it is preferable that the server system 100 receives the SMS message through its virtual comport, and displays the received SMS message on the screen through a SMS test tool.

Subsequently, the SMS developer can easily perform a SMS test within the country without visiting the country to which mobile communication terminals are to be exported and performing a SMS (short message service) test.

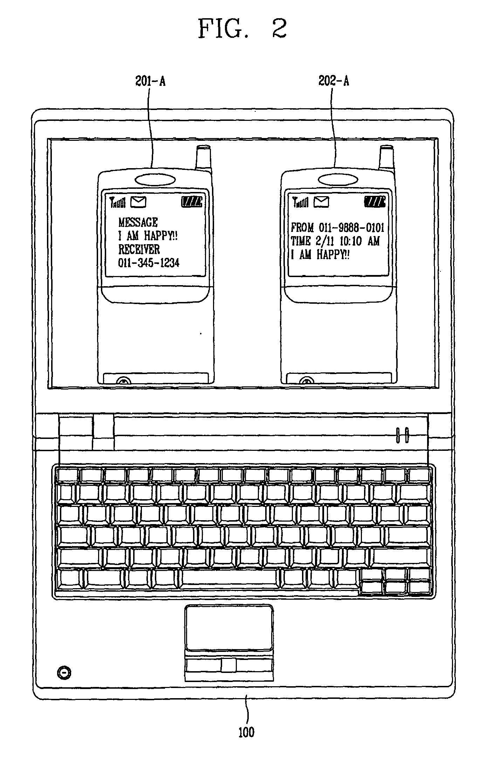

FIG.2 is an exemplary view showing a screen of a SMS test tool installed on a server system in accordance with the present invention.

As shown in FIG.2, a virtual image 201-A of the sending mobile communication terminal 201 and a virtual image 202-A of the receiving mobile communication terminal 202 are displayed on the screen of the SMS test tool. Thus, the SMS developer can enter a SMS message containing a receiver phone number and a message desired to be sent through the displayed sending mobile communication terminal 201-A.

Moreover, the SMS developer can check the information of the SMS message received by the receiving mobile communication terminal 202 through the displayed receiving mobile communication terminal 202-A. Here, the SMS message of the receiving mobile communication terminal 202 transmitted to the server system 100 contains every information displayed on the screen of the receiving mobile communication terminal 202 such as a sender phone number, a message reception time, etc. as well as a message (for example, "I am Happy!!) written by the SMS developer.

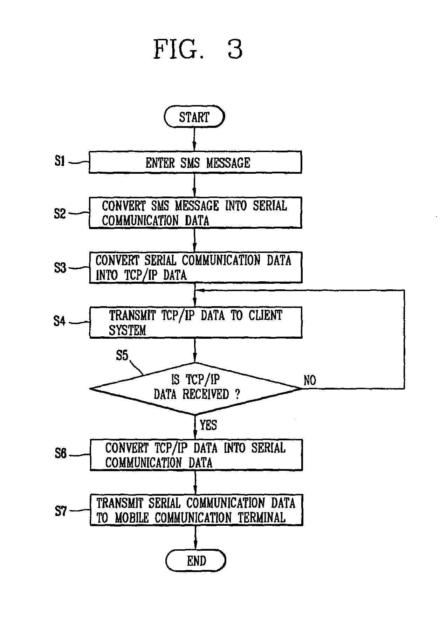

Hereinafter, a method for transmitting a SMS message to the client system 200 from the server system 100 of the SMS remote control system for the mobile communication terminal in accordance with the embodiment of the present invention will be described in detail with reference to FIG.3.

FIG.3 is a flow chart showing a method for transmitting a SMS message to a client system from a server system of the SMS remote control system for the mobile communication terminal in accordance with the embodiment of the present invention.

First, the SMS developer enters a SMS message containing a message desired to be sent and a receiver phone number (the phone number of the receiving mobile communication terminal 202) through a SMS test tool installed on the serer system 100 (S1). At this time, the server system 100 converts the SMS message containing the message and the receiver phone number into a serial communication data, and transmits the serial communication data to a virtual comport (S2).

The server system 100 allocates the IP of the client system 200 to the serial communication data transmitted to the virtual comport, converts the IP-allocated serial communication data into a TCP/IP data (S3), and then transmits the TCP/IP data to the client system 200 via the internet (S4).

When the TCP/IP data is received via the internet (S5), the client system 200 converts the received TCP/IP data into a serial communication data (S6), and transmits the serial communication data to the sending mobile communication terminal 201 through a virtual comport (S7). At this time, the sending mobile communication terminal 201 sends the SMS message contained in the serial communication data to the receiving mobile communication terminal 202 corresponding to the receiver phone number contained in the SMS message via a wireless communication network.

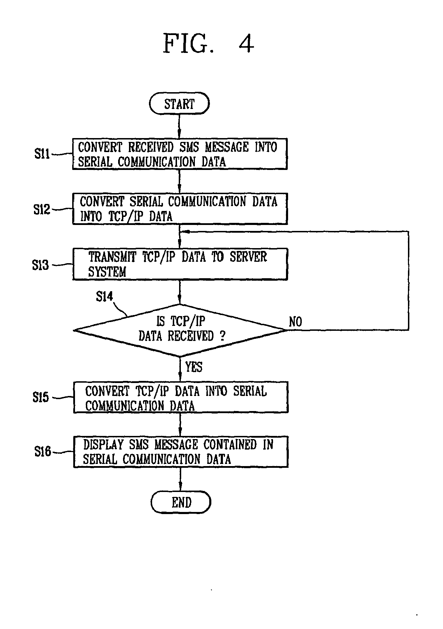

Hereinafter, a method for transmitting a SMS message to the server system 100 from the client system 200 of the SMS remote control system for the mobile communication terminal in accordance with the embodiment of the present invention will be described with reference to FIG.4

FIG.4 is a flow chart showing a method for transmitting a SMS message to the server system from the client system of the SMS remote control system for the mobile communication terminal in accordance with the embodiment of the present invention.

First, the receiving mobile communication terminal 202 receives the SMS message via the wireless communication network, converts the received SMS message into a serial communication data, and transmits the serial communication data to the client system 200 via the virtual comport.

The client system 200 allocates the IP of the server system 100 to the serial communication data received from the receiving mobile communication terminal 202, converts the IP-allocated serial communication data into a TCP/IP data (S12), and transmits the TCP/IP data to the server system via the internet (S13).

When the TCP/IP data is received from the client system via the internet (S14), the server system 100 converts the received TCP/IP data into a serial communication data (S15), and displays the SMS message contained in the serial communication data on the screen through a SMS test tool (S16).

Consequently, the SMS developer can easily check within the country if the SMS of a mobile communication terminal brought to a foreign country is normally performed based on a SMS message displayed on the screen of the server system 100 without going to the foreign country to test the SMS of the mobile communication terminal.

As described above in detail, the SMS remote control system and method for the mobile communication terminal in accordance with the embodiment of the present invention has the effect of enabling a user to easily check if the SMS of the mobile communication terminal at a remote location is normally performed controlling the SMS of the mobile communication terminal from a remote location via the internet. For instance, the SMS developer in Korea can easily check if a SMS test message is normally sent and received through a server system in the US without going to the US by themselves in order to test the SMS of the mobile communication terminal by sending a SMS test message by control of a first mobile communication terminal connected to a client system in the US through the server system in Korea, receiving the SMS message through a second mobile communication terminal connected to the client system, and transmitting the received SMS message to the server system.

## Claims

1. A short message service (SMS) remote control method for a mobile communication terminal, comprising the steps of:
transmitting a SMS (short message service) message to a first mobile communication terminal at a remote location via the internet;
transmitting the SMS message transmitted to the first mobile communication terminal to a second mobile communication terminal at the remote location; and
transmitting the SMS message transmitted to the second mobile communication terminal via the internet.

2. The method of claim 1, further comprising the step of displaying the SMS message received from the second mobile communication terminal via the internet.

3. The method of claim 1, wherein the SMS message is a SMS test message for testing the SMS.

4. The method of claim 1, wherein the step of transmitting the SMS message to the first mobile communication terminal comprise the steps of:
transmitting the SMS message to a client system connected to the internet through a server system connected to the internet; and
transmitting the SMS message transmitted to the client system to the first mobile communication terminal connected to the client system.

5. The method of claim 4, wherein the step of transmitting the SMS message transmitted to the first mobile communication terminal to the second mobile communication terminal is the step of transmitting the SMS message transmitted to the first mobile communication terminal to the second mobile communication terminal connected to the client system via a wireless communication network.

6. The method of claim 5, wherein the step of transmitting the SMS message transmitted to the second mobile communication terminal via the internet comprises the steps of:
transmitting the SMS message transmitted to the second mobile communication terminal to the client system; and
transmitting the SMS message transmitted to the client system to the server system via the internet.

7. The method of claim 6, wherein the SMS message transmitted to the first mobile communication terminal and the SMS message transmitted to the second mobile communication terminal are displayed on a screen of the server system through a SMS test program.

8. The method of claim 7, wherein the first mobile communication terminal receives the SMS message through a first virtual comport of the client system and transmits the received SMS message to the second mobile communication terminal through a SMS call, and
the second mobile communication terminal transmits the SMS message transmitted through the SMS call to a second virtual comport of the client system.

9. The method of claim 8, wherein the server system converts the SMS message written by a user into a serial communication data, converts the serial communication data into a TCP/IP data and transmits the TCP/IP data to the client system via the internet, and
the client system converts the TCP/IP data into the serial communication data, transmits the serial communication data to the second mobile communication terminal, converts the serial communication data received from the second mobile communication terminal into a TCP/IP data and transmits the TCP/IP data to the server system via the internet.

10. The method of claim 1, wherein the SMS message transmitted to the first mobile communication terminal contains a message inputted by a user and the phone number of the second mobile communication terminal,
wherein the first mobile communication terminal transmits the SMS message to the second mobile communication terminal based on the phone number of the second mobile communication terminal.

11. The method of claim 10, wherein the SMS message transmitted to the second mobile communication terminal contains a message and the phone number of the first mobile communication terminal.

12. A short message service (SMS) remote control method for a mobile communication terminal, comprising the steps of:
converting a SMS (short message service) test message written by a user into a serial communication data through a server system, converting the serial communication data into a TCP/IP data and transmitting the TCP/IP data to a client system via the internet;
converting the TCP/IP data received from the server system into the serial communication data and transmitting the serial communication data to a first mobile communication terminal connected to a first virtual comport of the client system;
transmitting the SMS message contained in the serial communication data transmitted to the first mobile communication terminal to a second mobile communication terminal connected to a second virtual comport of the client system via a wireless communications network;
converting the SMS message transmitted to the second mobile communication terminal into the serial communication data and transmitting the serial communication data to the client system;
converting the serial communication data transmitted to the client system from the second mobile communication terminal into a TCP/IP data and
transmitting the TCP/IP data to the server system via the internet; and
converting the TCP/IP data received from the client system via the internet into the serial communication data and displaying the SMS message contained in the serial communication data on a screen of the server system.

13. The method of claim 12, wherein the server system displays the SMS message transmitted to the client system and the SMS message received from the client system on the screen through a SMS test tool.

14. The method of claim 12, wherein the first mobile communication terminal transmits the SMS message received from the client system to the second mobile communication terminal through a SMS call.

15. The method of claim 14, wherein the second mobile communication terminal transmits the SMS message transmitted through the SMS call to the client system through serial data communication.

16. The method of claim 12, wherein the SMS message transmitted to the server system is information displayed on the screen of the second mobile communication terminal when transmitted to the second mobile communication terminal.

17. A short message service (SMS) remote control system for a mobile communication terminal, comprising:
a server system transmitting a SMS (short message service) message via the internet; and
a client system being connected to the server system via the internet, transmitting the SMS message received from the server system via the internet to a first mobile communication terminal and transmitting the SMS message received from a second mobile communication terminal to the server system via the internet,
wherein the server system displays the SMS message received from the client system on a screen.

18. The system of claim 17, wherein the first mobile communication terminal is connected to a virtual comport of the client system, and transmits the SMS message received from the client system to the second mobile communication terminal via a wireless communication network.

19. The system of claim 17, wherein the second mobile communication terminal is connected to a virtual comport of the client system, receives the SMS message received from the first mobile communication terminal via a wireless communication network, and transmits the received SMS message to the client system.

20. The system of claim 17, wherein the server system displays the SMS message transmitted to the first mobile communication terminal and the SMS message received by the second mobile communication terminal on the screen through a SMS test tool.
